# EUROPÄISCHE PATENTANMELDUNG

(11) **EP 2 620 598 A2**
(43) Veröffentlichungstag der Anmeldung: **31.07.2013**
(21) Anmeldenummer: 13151304.6
(22) Anmeldetag: 15.01.2013
(51) Int. Cl.: F01D 11/00, F01D 11/12, F02C 7/28, F16J 15/44

(54) **Dichtungsanordnung, Verfahren sowie Strömungsmaschine**

(30) Priorität: 25.01.2012 DE 102012201050
(71) Anmelder: MTU Aero Engines AG, 80995 München (DE)
(72) Erfinder: Bayer, Erwin, Dr., 85221 Dachau (DE); Heß, Thomas, 81541 München (DE); Feldmann, Manfred, 82223 Eichenau (DE); Hiller, Sven, Dr., 85244 Röhrmoos (DE); Geiger, Peter, 80997 München (DE)

(57) **Zusammenfassung**

Offenbart sind eine Dichtungsanordnung (1) für eine Strömungsmaschine zur Abdichtung eines Radialspaltes zwischen einem Rotor und einem Stator, mit einer Vielzahl von Dichtsegmenten (4), die jeweils ein Wabenelement (8) und einen Grundkörper (10) zur Aufnahme des Wabenelements (8) aufweisen, und mit zumindest einem Träger (6) zur Anordnung der Dichtsegmente (4) an einem Rotorabschnitt oder Statorabschnitt, wobei die Grundkörper (10) durch eine radiale Bewegung und durch eine plastische Verformung zumindest eines Körperabschnitts (14, 16) an dem zumindest einem Träger (6) anordbar sind, ein generatives Verfahren zur integralen Herstellung der Dichtsegmente und eine Strömungsmaschine.

## Beschreibung

Die Erfindung betrifft eine Dichtungsanordnung nach dem Oberbegriff des Patentanspruchs 1, ein Verfahren zur Herstellung eines Dichtsegmentes sowie eine Strömungsmaschine.

Dichtungsanordnungen werden bei Strömungsmaschinen wie Flugzeugtriebwerken regelmäßig zur Abdichtung eines radialen Spaltes zwischen rotierenden Triebwerkskomponenten und stationären Triebwerkskomponenten eingesetzt. Sie ermöglichen ein beschädigungsfreies Einlaufen von Schaufelspitzen, Dichtstegen und dgl. und bewirken eine Reduzierung von Leckageströmen.

Bekannte Dichtungsanordnungen weisen eine Vielzahl von Dichtsegmenten auf, die jeweils aus einem Wabenelement und einem Grundkörper zur Aufnahme des Wabenelementes bestehen. Der Grundkörper kann ein integraler Körperabschnitt einer Triebwerkskomponente wie ein Außendeckband einer Laufschaufel sein oder ein einzelnes Bauteil, das an einem rotor- oder statorseitigen Tragabschnitt, wie bspw. ein Radialbund einer Rotornabe, gegenüber einer Leitschaufel montiert ist.

Das Wabenelement und der Grundkörper werden gewöhnlich getrennt voneinander hergestellt und anschließend durch Hochtemperaturlöten im Vakuum miteinander verbunden. Der Grundkörper ist häufig ein massiver Körper, der vorzugsweise aus einer hochtemperaturfesten Nickellegierung hergestellt ist. Das Wabenelement besteht meist aus einer Vielzahl von umgeformten und miteinander zu Waben verbundenen Blechen. Die getrennte Herstellung des Wabenelementes und des Grundkörpers erleichtert zwar deren Ausbildung, jedoch kann sich beim Lötprozess ein Verzug der Waben einstellen, so dass deren Durchmesser durch bspw. Nachschleifen nachbearbeitet werden müssen. Das Nachschleifen ist besonders aufwendig, wenn der Grundkörper ein integraler Körperabschnitt wie ein Außendeckband einer Leitschaufel oder Laufschaufel ist, da die Einspannung und Handhabung der Leitschaufel kompliziert ist. Zudem ist der Austausch einzelner Dichtsegmente durch die stoffschlüssige Verbindung aufwendig. Wenn der Grundkörper an einem Tragabschnitt montiert wird, erfolgt dies meistens über einen Schiebeeingriff in Umfangsrichtung, wodurch beim Ersatz eines der Dichtsegmente mehrere Dichtsegmente von dem Tragabschnitt demontiert werden müssen. Die Blechumformung schränkt zudem die Gestaltungsfreiheit der Dichtsegmente und somit die der Dichtungsanordnung ein, wodurch konstruktive Kompromisse eingegangen werden müssen. Des Weiteren wirken sich die konstruktiven Kompromisse nachteilig auf deren Dichtwirkung und das Gewicht der Dichtsegmente aus. Zudem wird die Konstruktion der Dichtsegmente durch die Anbindung des Wabenelements an den Grundkörper bestimmt.

Aus dem deutschen Patent DE 10 259 963 B4 ist eine Wabendichtung bekannt, deren Dichtsegmente einteilig durch pulvermetallurgisches Spritzgießen hergestellt sind. Dieses Verfahren ermöglicht zwar eine weitestgehend flexible Gestaltungsfreiheit, jedoch erfordert das Spritzgießen einen verhältnismäßig hohen vorrichtungstechnischen Aufwand.

Aufgabe der Erfindung ist es, eine Dichtungsanordnung zu schaffen, die die vorgenannten Nachteile beseitigt und einfach zu montieren und demontieren ist. Des Weiteren ist es Aufgabe der Erfindung, ein Verfahren zur vereinfachten Herstellung eines Dichtsegmentes sowie eine effiziente Strömungsmaschine zu schaffen.

Diese Aufgabe wird gelöst durch eine Dichtungsanordnung mit den Merkmalen des Patentanspruchs 1, durch ein Verfahren mit den Merkmalen des Patentanspruchs 12 sowie durch eine Strömungsmaschine mit den Merkmalen des Patentanspruchs 13.

Eine erfindungsgemäße Dichtungsanordnung für eine Strömungsmaschine zur Abdichtung eines Radialspaltes zwischen einem Rotor und einem Stator hat eine Vielzahl von Dichtsegmenten, die jeweils ein Wabenelement und einen Grundkörper zur Aufnahme des Wabenelements aufweisen. Erfindungsgemäß haben die Grundkörper rückseitig plastisch verformbare Befestigungselemente. Zudem ist erfindungsgemäß zumindest ein Träger zur Anbindung der Grundköper an einen Rotorabschnitt oder Statorabschnitt vorgesehen, der Aufnahmen zur Aufnahme der Befestigungselemente aufweist.

Die erfindungsgemäße Lösung ermöglicht eine einfache Montage und Demontage der Dichtungsanordnung, da die Dichtsegmente durch plastische Verformung der Befestigungselemente schnell an dem zumindest einem Träger fixiert werden können. Jedes Dichtsegment ist für sich lagefixierbar, wobei bei Demontage eines benachbarten Dichtsegmentes seine Lage nicht verändert wird. Hierdurch ist es möglich, bspw. auf den bekannten Schiebeeingriff zu verzichten, wodurch die Dichtsegmente einzeln entfernt werden können. Eine Demontage der in Umfangsrichtung benachbarten Dichtsegmente ist nicht notwendig. Dadurch, dass die Befestigungselemente rückseitig der Grundkörper angeordnet sind, wird eine Beschädigung der Wabenelemente bei der Montage oder Demontage der Dichtsegmente verhindert. Dadurch, dass die Dichtsegmente getrennt von dem zumindest einen Träger hergestellt sind, können diese im endbearbeiteten Zustand an dem Träger angebunden werden.

Die Montage der Dichtungsanordnung ist besonders einfach, wenn die verformbaren Befestigungselemente als sich in Radialrichtung der Dichtungsanordnung erstreckende stiftartige Elemente wie Niete ausgebildet sind, die eine form- und kraftschlüssige Verbindung der Grundkörper bzw. Dichtsegmente an dem zumindest einen Träger ermöglichen. Zur Vereinfachung der plastischen Verformung und zur Gewichtsreduzierung ist es vorteilhaft, wenn die Niete Hohlniete sind.

Die Montage lässt sich weiter vereinfachen, wenn die Grundkörper und/oder der zumindest eine Träger formstabile Befestigungselemente aufweisen/t. Die formstabilen Befestigungselemente ermöglichen einen Formschluss und benötigen keine Verformungsschritte. Sie sind insbesondere dann vorteilhaft, wenn sie einige der verformbaren Befestigungselemente ersetzen, da hierdurch weniger Befestigungselemente verformt werden müssen. Beispielsweise sind die formstabilen Befestigungselemente Hakenabschnitte, die seitlich an den Grundkörpern oder dem zumindest einem Träger ausgebildet sind und im montierten Zustand der Dichtsegmente den zumindest einen Träger oder die Grundkörper seitlich umgreifen.

Zur Verbesserung der Dichtwirkung zwischen in Umfangsrichtung benachbarten Dichtsegmenten können die Grundkörper an ihren seitlichen Stoßbereichen jeweils einen Überlappstoß bilden.

Um eine Beschädigung der Wabenelemente in den Stoßbereichen zu vermeiden, können Wabenwände eine größere Wandstärke als in Zwischenbereichen aufweisen. Beispielsweise sind die Wandstärken in den Stoßbereichen gegenüber den Wandstärken in den Zwischenbereichen verdoppelt.

Zur Lärmreduzierung im Innern der Strömungsmaschine ist es vorteilhaft, wenn die Wabenelemente Hohlräume aufweisen. Eine hohe Schallabsorption ist insbesondere dann erreichbar, wenn sich diese in Richtung der Grundkörper öffnen.

Bei einem Ausführungsbeispiel weist der Träger einen in Strömungsrichtung betrachtet vorderen Ring und einen hinteren Ring mit jeweils einem Steg zur beidseitigen Lagerung an dem Rotorabschnitt oder dem Statorabschnitt und jeweils einen Flansch zur Ausbildung der Aufnahmen und/oder der formstabilen Befestigungselemente auf. Der Träger ermöglicht den Ausgleich von Bauteil- und Montagetoleranzen. Zudem ermöglicht dieses Ausführungsbeispiel den Ausgleich von unterschiedlichen Wärmeausdehnungen der Dichtsegmente und des Rotorabschnitts oder des Statorabschnitts.

Zur Vermeidung von Wärmespannungen innerhalb der Dichtungsanordnung und zwischen dem Rotorabschnitt oder dem Statorabschnitt, kann der Träger mittels eines Gleitsitzes an dem Rotorabschnitt oder dem Statorabschnitt gelagert sein.

Bei einem alternativen Ausführungsbeispiel ist jeweils ein Außendeckband einer Schaufel ein Träger. Je nach Art der Schaufel, Laufschaufel oder Leitschaufel, stellt diese den Rotorabschnitt oder Statorabschnitt dar. Eine einzelne Befestigung des Trägers an dem Rotorabschnitt oder dem Statorabschnitt entfällt somit.

Um Strömungsturbulenzen im Strömungskanal insbesondere bei dem alternativen Ausführungsbeispiel zu vermeiden, können die Träger bzw. Außendeckbänder an einer den Strömungskanal begrenzenden Wandung im Bereich der Aufnahmen Vertiefungen zur Einebnung von durch die Träger bzw. Deckbänder ragenden Befestigungselementabschnitte aufweisen.

Bevorzugterweise sind die Wabenelemente generativ mit dem Grundkörper ausgebildet. Hierdurch können die Dichtsegmente nahezu frei gestaltet werden und nachträgliche Fügearbeiten wie das Verlöten der Wabenelemente mit den Grundkörpern entfällt, wodurch insbesondere ein Bauteilverzug vermieden wird und eine Nachbearbeitung entfällt. Die Befestigungselemente sind bevorzugterweise ebenfalls generativ mit dem Grundkörper hergestellt, allerdings können diese auch nach Herstellung stoffschlüssig an den Grundkörper angebunden werden.

Bei einem bevorzugten Verfahren zur Herstellung eines erfindungsgemäßen Dichtsegmentes für eine Dichtungsanordnung, das jeweils ein Wabenelement, einen Grundkörper und Befestigungselemente zur Befestigung an einem Träger aufweist, werden der Grundkörper, das Wabenelement und die Befestigungselemente generativ hergestellt.

Die generative Herstellung erlaubt eine optimale, da nahezu freie, Gestaltung der Dichtsegmente und insbesondere der Wabenelemente bezüglich Einlaufverhalten, Dichtwirkung, Wanddicken bzw. Wanddickenverteilung, Wandporosität, Hohlräumen zu Schallabsorption und dergleichen. Beispielsweise können längsgestreckte Waben, Waben mit allseitig gleicher Wandstärke, runde Säulen und dergleichen ausgebildet werden. Somit kann das Dichtsegment funktionell und strukturell optimiert werden, was sich neben einer optimierten Dichtwirkung und Geräuschemission in einem geringen Gewicht ausdrückt. Ein Lötprozess zur Befestigung der Wabenelemente an den Grundkörpern ist nicht notwendig, so dass das Dichtsegment ohne nachträgliche Schleifprozeduren auf Maß gefertigt werden kann. Dadurch, dass die Befestigungselemente integrale Bestandteile des Dichtsegmentes bilden, müssen diese bei der Montage nicht erst montiert oder eingebracht werden, wodurch die Montage der Dichtungsanordnung weiter vereinfacht wird.

Eine bevorzugte Strömungsmaschine hat zumindest eine erfindungsgemäße Dichtungsanordnung. Eine derartige Strömungsmaschine zeichnet sich durch eine verbesserte Dichtwirkung und somit durch einen hohen Wirkungsgrad aus. Zudem ist die Strömungsmaschine durch die verbesserte Schallabsorption im Innern geräuschreduziert.

Sonstige vorteilhafte Ausführungsbeispiele der Erfindung sind Gegenstand weiterer Unteransprüche.

Im Folgenden werden bevorzugte Ausführungsbeispiele der Erfindung anhand schematischer Darstellungen näher erläutert. Es zeigen:
- Figur 1: einen Axialschnitt durch ein erstes Ausführungsbeispiel einer erfindungsgemäßen Dichtungsanordnung, und
- Figur 2: einen Axialschnitt durch ein zweites Ausführungsbeispiel der erfindungsgemäßen Dichtungsanordnung.

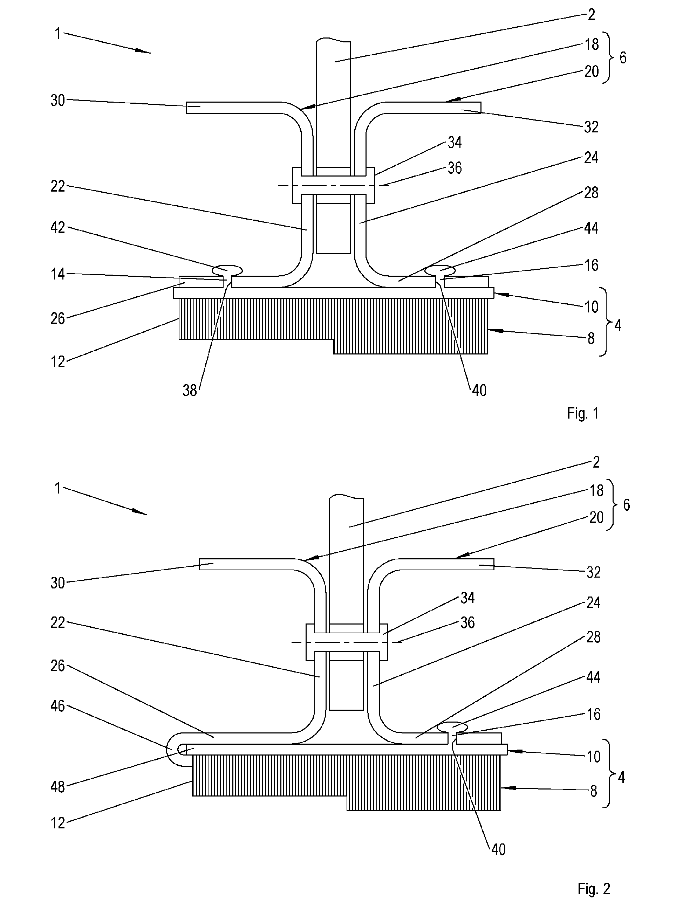

In Figur 1 ist ein Schnitt in Strömungsrichtung durch ein erstes Ausführungsbeispiel einer erfindungsgemäßen Dichtungsanordnung 1 für eine Strömungsmaschine zur Abdichtung eines Radialspaltes zwischen einem Rotor und einem Stator gezeigt. Die Dichtungsanordnung 1 ist bei diesem Ausführungsbeispiel an einem Statorabschnitt 2 angebunden und weist eine Vielzahl von Dichtsegmenten 4 sowie einen Träger 6 auf. Der Statorabschnitt 2 kann grundsätzlich ein Gehäuseabschnitt, ein Abschnitt einer Leitschaufel, ein Abschnitt eines Schaufelträgers und dergleichen sein. Beispielsweise ist die Dichtungsanordnung 1 im Bereich einer Niederdruckturbine eines Flugzeugtriebwerks angeordnet.

Die Dichtsegmente 6 sind in Umfangsrichtung jeweils nebeneinander an dem Träger 6 angeordnet und bilden einen eine Rotornabe umfassenden geschlossenen bzw. nahezu geschlossenen Dichtsegmentenring. Sie haben jeweils ein Wabenelement 8 und einen Grundkörper 10.

Das Wabenelement 8 weist eine Vielzahl von Waben auf, die über einzelne Wände 12 voneinander getrennt sind. Die Waben und die Wände 12 haben jeweils einen Querschnitt und eine radiale Höhe bzw. eine Länge, der sich nach Randbedingungen wie Einlaufeigenschaften, Dichtwirkung und Einbauposition richtet. Insbesondere können die Waben und Wände 12 auch unterschiedliche Querschnitte und, wie in Figur 1 gezeigt, bereichsweise unterschiedliche Höhen aufweisen. Die Wände 12 haben zudem eine individuell eingestellte Porosität.

Zur Vermeidung einer Beschädigung der Wabenelemente 8 durch seitliche Berührungen mit dem jeweils benachbarten Wabenelement sind in ihren seitlichen Stoßbereichen die Wände 12 vorzugsweise wanddickenverstärkt gegenüber den Wänden 12, die im Zwischenbereich zwischen den Stoßbereichen positionierten sind. Aufgrund des Axialschnittes sind die Stoßbereiche jedoch nicht sichtbar.

Zur Schallabsorption im Innern der Strömungsmaschine sind zwischen den Waben nicht gezeigte Hohlräume ausgebildet, die beispielsweise in Richtung des Grundkörpers 10 vergrößert sind.

Der Grundkörper 10 dient zur Aufnahme jeweils eines Wabenelementes 8. Er ist plattenartig ausgebildet und verschließt die Waben einseitig. Somit ist der Grundkörper 10 quasi als eine durchgehende Bodenplatte des Wabenelementes 8 ausgebildet. Er hat rückseitig verformbare Befestigungselemente 14, 16, die integral mit dem Grundkörper 10 und insbesondere generativ ausgebildet sind. Vorzugsweise sind die verformbaren Befestigungselemente 14, 16 sich in Radialrichtung erstreckende stiftartige Elemente wie Niete und insbesondere Hohlniete.

Zur Verbesserung der Dichtwirkung in den seitlichen Stoßbereichen bilden benachbarte Grundkörper 10 einen Überlappstoß. Hierzu haben die Grundkörper 10 jeweils einen in radialer Richtung zum jeweiligen benachbarten Grundkörper versetzten Seitenabschnitt.

Der Träger 6 weist einen in Strömungsrichtung betrachtet vorderen Ring 18 und einen hinteren Ring 20 auf. Die Ringe 18, 20 umgreifen die Rotornabe und sind zur vereinfachten Montage segmentiert. Insbesondere sind die Ringe 18, 20 U-förmige Blechprofile, die jeweils einen Steg 22, 24, einen Innenflansch 26, 28 und einen Außenflansch 30, 32 aufweisen.

Die Stege 22, 24 dienen zur Anbindung der Ringe 18, 20 an den Statorabschnitt 2 und haben hierzu einen dem Statorabschnitt 2 entsprechenden radialen Verlauf. Zum Ausgleich von unterschiedlichen Wärmeausdehnungen des Statorabschnitts 2 und der Ringe 18, 20 sind diese mittels eines Gleitsitzes mit dem Statorabschnitt 2 verbunden. Zur Bildung des Gleitsitzes ist in Umfangsrichtung in regelmäßigen Abständen jeweils ein Lagerelement wie ein Axialbolzen 34 vorgesehen, der durch eine sich fluchtend durch die Stege 22, 24 und den Statorabschnitt 2 erstreckende Bohrung 36 geführt ist.

Die Innenflansche 26, 28 dienen zur Anbindung der Dichtsegmente 4. Sie erstrecken sich in axialer Richtung und weisen jeweils integrale Aufnahmen 38, 40 zum Durchführen der verformbaren Befestigungselemente 14, 16 auf. In dem gezeigten Ausführungsbeispiel sind die Aufnahmen 38, 40 zu den Nieten 14, 16 komplementär ausgebildete Durchgangsbohrungen.

Die Außenflansche 30, 32 dienen zur Stabilisierung der Ringe 18, 20. Sie erstrecken parallel zu den Innenflanschen 26, 28 und sind somit in Axialrichtung orientiert.

Bei der Montage werden die Befestigungselemente 14, 16 in Radialrichtung durch die Aufnahmen 38, 40 geführt und dann im Kopfbereich 42, 44 mittels eines Nietprozesses umgeformt. Als Ergebnis des Nietprozesses sind die Dichtsegmente 4 kraft- und formschlüssig an dem Träger 6 fixiert.

Bei der Demontage werden die Niet- bzw. Stiftköpfe 42, 44 entfernt und die Dichtsegmente 4 können in Radialrichtung einzeln von dem Träger 6 entnommen werden.

In Figur 2 ist ein alternatives Ausführungsbeispiel der erfindungsgemäßen Dichtungsanordnung 1 gezeigt. Im Unterschied zum ersten Ausführungsbeispiel nach Figur 1 weist dieses Ausführungsbeispiel als Ersatz für einige der verformbaren Befestigungselemente 14, 16 formstabile Befestigungselemente 46 auf. In dem gezeigten Ausführungsbeispiel sind die formstabilen Befestigungselemente 46 Hakenabschnitte, die sich seitlich von einem der Innenflansche 26, 28 erstrecken und einen wabenfreien Randabschnitt 48 des jeweiligen Grundkörpers 10 umgreifen. Bevorzugterweise sind die formstabilen Befestigungselemente 46 stromaufwärts der verformbaren Befestigungselemente 14, 16 und somit im Bereich des vorderen Ringes 18 an der druckhöheren Seite des Statorabschnittes 2 angeordnet.

Bei einem erfindungsgemäßen Verfahren zur Herstellung der Dichtsegmente 4 werden der Grundkörper 10, die Wabenelemente 8, sowie die Befestigungselemente 14, 16, 46 integral und insbesondere generativ als ein Bauteil hergestellt. Dabei wird die Form und Wanddicke bzw. Wanddickenverteilung, Wandporosität sowie die Gestaltung der Hohlräume an die unterschiedlichen Randbedingungen wie Einlaufeigenschaften, Dichtwirkung, Lärmreduzierung und dergleichen individuell angepasst. Ein bevorzugtes generatives Verfahren ist das selektive Laserschmelzen oder Lasersintern.

Offenbart sind eine Dichtungsanordnung für eine Strömungsmaschine zur Abdichtung eines Radialspaltes zwischen einem Rotor und einem Stator, mit einer Vielzahl von Dichtsegmenten, die jeweils ein Wabenelement und einen Grundkörper zur Aufnahme des Wabenelements aufweisen, und mit zumindest einem Träger zur Anordnung der Dichtsegmente an einem Rotorabschnitt oder Statorabschnitt, wobei die Grundkörper durch eine radiale Bewegung und durch eine plastische Verformung zumindest eines Körperabschnitts an dem zumindest einem Träger anordbar sind, ein generatives Verfahren zur integralen Herstellung der Dichtsegmente und eine Strömungsmaschine.

### Bezugszeichenliste

- 1: Dichtungsanordnung
- 2: Statorabschnitt
- 4: Dichtsegment
- 6: Träger
- 8: Wabenelement
- 10: Grundkörper
- 12: Wand
- 14: verformbares Befestigungselement
- 16: verformbares Befestigungselement
- 18: vorderer Ring
- 20: hinterer Ring
- 22: Steg
- 24: Steg
- 26: Innenflansch
- 28: Innenflansch
- 30: Außenflansch
- 32: Außenflansch
- 34: Axialbolzen
- 36: Bohrung
- 38: Aufnahme
- 40: Aufnahme
- 42: Kopfbereich / Nietkopf
- 44: Kopfbereich / Nietkopf
- 46: formstabiles Befestigungselement
- 48: Randabschnitt

## Patentansprüche

1. Dichtungsanordnung (1) für eine Strömungsmaschine zur Abdichtung eines Radialspaltes zwischen einem Rotor und einem Stator, mit einer Vielzahl von Dichtsegmenten (4), die jeweils ein Wabenelement (8) und einen Grundkörper (10) zur Aufnahme des Wabenelements (8) aufweisen, **dadurch gekennzeichnet, dass** die Grundkörper (10) rückseitig plastisch verformbare Befestigungselemente (14, 16) haben, und zumindest ein Träger (6) zur Anbindung der Grundköper (10) an einen Rotorabschnitt oder Statorabschnitt (2) vorgesehen ist, der Aufnahmen (38, 40) zur Aufnahme der Befestigungselemente (14, 16) aufweist.

2. Dichtungsanordnung nach Anspruch 1, wobei die Befestigungselemente (14, 16) sich in Radialrichtung erstreckende stiftartige Elemente sind.

3. Dichtungsanordnung nach Anspruch 1 oder 2, wobei die Grundkörper (10) und/oder der zumindest eine Träger (6) formstabile Befestigungselemente (46) aufweisen/t.

4. Dichtungsanordnung nach Anspruch 1, 2 oder 3, wobei die Grundköper (10) in seitlichen Stoßbereichen jeweils einen Überlappstoß bilden.

5. Dichtungsanordnung nach einem der vorhergehenden Ansprüche, wobei Wabenwände in den Stoßbereichen eine größere Wandstärke als in Zwischenbereichen haben.

6. Dichtungsanordnung nach einem der vorhergehenden Ansprüche, wobei die Wabenelemente (8) Hohlräume zur Schallabsorption aufweisen.

7. Dichtungsanordnung nach einem der vorhergehenden Ansprüche, wobei der zumindest eine Träger einen vorderen Ring (18) und einen hinteren Ring (20) mit jeweils einem Steg (22, 24) zur beidseitigen Lagerung an dem Rotorabschnitt oder dem Statorabschnitt (2) und jeweils einen Flansch (26, 28) zur Ausbildung der Aufnahmen (38, 40) und/oder der formstabilen Befestigungselemente (46) aufweist.

8. Dichtungsanordnung nach Anspruch 8, wobei der Träger (6) mittels eines Gleitsitzes an dem Rotorabschnitt oder Statorabschnitt (2) lagerbar ist.

9. Dichtungsanordnung nach einem der Ansprüche 1 bis 6, wobei jeweils ein Außendeckband einer Schaufel ein Träger (6) ist.

10. Dichtungsanordnung nach Anspruch 9, wobei die Träger (6) an einer einen Strömungskanal begrenzenden Wandung im Bereich der Aufnahmen Vertiefungen zur Einebnung von durch die Träger (6) ragenden Befestigungselementenabschnitte (14, 16) aufweist.

11. Dichtungsanordnung nach einem der vorhergehenden Ansprüche, wobei die Wabenelemente (8) generativ mit den Grundkörpern (10) ausgebildet sind.

12. Verfahren zur Herstellung eines Dichtsegments (4) für eine Dichtungsanordnung (1) nach einem der vorhergehenden Ansprüche, das jeweils ein Wabenelement (8), einen Grundkörper (10) und Befestigungselemente (14, 16, 46) zur Befestigung an einem Träger (6) aufweist, wobei der Grundkörper (10), das Wabenelement (8) und die Befestigungselemente (14, 16, 46) generativ hergestellt werden.

13. Strömungsmaschine mit einer Dichtungsanordnung (1) nach einem der Ansprüche 1 bis 11.
